Europäisches Patentamt

(19) European Patent Office

Office européen des brevets

(11) Publication number : 0 505 338 A1

(12) **EUROPEAN PATENT APPLICATION**

(21) Application number : 92830137.3

(22) Date of filing : 20.03.92

(51) Int. Cl.5 : **B29D 31/00, F15B 1/47**

PRIORITIES: 200391 IT PD9100060, 260791 IT PD9100132, 120991 ITU PD9100084, 120991 IT PD9100158.

(30) Priority : **20.03.91**
**26.07.91**
**12.09.91**
**12.09.91**

(43) Date of publication of application :
**23.09.92 Bulletin 92/39**

(84) Designated Contracting States :
**AT BE CH DE DK ES FR GB GR IT LI NL PT SE**

(71) Applicant : **MARTINELLO ARTICOLI TECNICI SpA**
**Viale Regione Veneto, 7/9, Zona Industriale**
**I-35020 Padova (IT)**

(72) Inventor : **Bilato, Cesare c/o MARTINELLO ARTICOLI TECNICI**
**Viale Regione Veneto, 7/9 Zona Industriale**
**I-35020 Padova (IT)**

(74) Representative : **Cicogna, Franco**
**Ufficio Internazionale Brevetti Dott.Prof.**
**Franco Cicogna Via Visconti di Modrone, 14/A**
**I-20122 Milano (IT)**

(54) Membrane for expansion tanks for reservoirs and autoclaves, and mold for making the membrane.

(57)    A membrane for expansion tanks comprises a distal neck (11) to be connected to an expansion tank and a hollow body (13) which extends from the neck and having, at a rest condition, at least an inwardly flexed portion (15) which can be outwardly flexed as a positive pressure differential is present between the inside of the hollow body and the outside environment in order to increases the operating volume of the hollow body.

FIG. 1

EP 0 505 338 A1

Jouve, 18, rue Saint-Denis, 75001 PARIS

## BACKGROUND OF THE INVENTION

The present invention relates to a membrane for expansion tanks, reservoirs, autoclaves, and a mold for making the membrane.

Autoclave vessels, which are broadly used in the hydraulic field, usually comprise a metal material vessel the inside of which is divided by a resilient membrane into two chambers one of which is filled by water and the other by pressurized air.

The separating membrane conventionally comprises a substantially spherical or oval element, generally made of a rubber material, which is held in a suitable opening of the vessel, which opening will be successively closed by a sleeve flange provided for coupling it to the remaining part of the hydraulic system.

At said opening, the membrane is provided with an annular flange edge to be interposed between the edge portions of the vessel opening and the closure flange.

Prior membranes are at present made with a rest volume which is much smaller than the overall volume of the vessel, and usually the volume ratio is of about 4:1 or even 5:1.

In operation, such a membrane is continuously subjected to a tension stress since it is usually filled by an amount of water larger than its rest volume.

This continuous comparatively high tension stress causes the membrane to break. Because of this reason, the operating volume of prior membranes should be increased: however, this requirement generates a difficult to solve making problem.

In fact,a membrane of the above mentioned type is made by injection molding the membrane material in multiple molds of comparatively high volumes, or they are made by pressure molding within suitable pressure molds.

In order to increase the volume or operating capability of these membranes, accordingly, it is necessary either to increase the inner volume of the molds or reduce the number of molding cavities for each mold.

A larger volume and weight of the molds require the use of larger and more expensive injection apparatus, whereas a reduction of the number of the molding cavities involves the drawback that the cost of each molding operation must be subdivided according to a less number of products, thereby increasing the individual cost of each membrane.

Moreover, during the assembling operations of the expansion tank, the membrane is usually pressurized to a set pressure. The gas used for providing such a pressure originates a great problem with respect to the storing periods before the installation of the expansion tank.

In fact, on the membrane acts a constant pressure which is not counter-balanced by a corresponding counter-pressure. Moreover, prior membranes for the above mentioned applications usually originate great making problems and, moreover, they can not be accurately made with a constant thickness.

Such a thickness unevenness, in turn, generates regions susceptible to be easily broken under the pressure of the pressurized gas.

Another drawback of these prior membranes is that the pressurized gas frequently causes the membrane to be undesirable folded in a permanent way, and this especially as a membrane is stored for a comparatively long time.

This random folds can reduce the useful life of the membrane, since the membrane is subjected to stretching stresses as it is inflated.

The membrane can be also damaged by a rubbing against the inner surface of the expansion tank; which can also cause the membrane to be broken.

## SUMMARY OF THE INVENTION

Accordingly, the aim of the present invention is to overcome the above mentioned drawbacks of prior art membranes for the above mentioned applications, by designing a membrane for expansion tanks which can not be "crushed" by the pressurized gas in the expansion tank.

Within the scope of this aim, a main object of the present invention is to provide such a membrane which, during the expansion thereof, is specifically adapted to greatly increase its capability without generating stretching stresses through its operating surface.

Another object of the present invention is to provide such a membrane which has a substantially even thickness.

Yet another object of the present invention is to provide a mold for making the above membrane which, the size of the membranes being the same, has a smaller volume than that of prior molds for the same application.

Yet another object of the present invention is to provide such a mold which allows to make very reduced cost membranes.

Yet another object of the present invention is to provide such a mold which can be quickly and easily fitted to existing apparatus for making said membranes.

According to one aspect of the present invention, the above mentioned aim and objects, as well as yet other objects, which will become more apparent hereinafter, are achieved by a membrane for expansion tanks for reservoirs and autoclaves, characterized in that said membrane comprises a distal neck portion to be affixed to an expansion tank and a hollow body extending from said neck portion and including, at a rest condition thereof, at least an inwardly bent portion which can be outwardly bent under a positive pressure differential between the inside of said hollow body and the outside environment in order to increase the operating volume of said holllow body.

For making the membrane according to the present invention, there is preferably used a mold which comprises at least a male element and at least a female element fitted into one another and defining therebetween at least a molding cavity for injection molding therein a synthetic material for forming said membrane, said mold being characterized in that said at least a male element is provided, on a surface thereof defining said cavity, with at least a recess adapted to form said inwardly bent portion of said membrane.

## BRIEF DESCRIPTION OF THE DRAWINGS

Further characteristics and advantages of the present invention will become more apparent hereinafter from the following detailed disclosure of some preferred, though not exclusive, embodiment of said membrane and mold, which are illustrated, by way of an indicative, but not limitative, example, in the accompanying drawings, where:

Figures 1 to 6 show a first embodiment of the mold for making a membrane according to the present invention and, more specifically:

Figure 1 is a perspective view illustrating the male element of the mold;

Figure 2 is a longitudinal cross-sectional view of the female element of the mold;

Figure 3 is a top plan view of the male element shown in Figure 1;

Figure 4 is a side view of the male element;

Figure 5 is a longitudinal cross-sectional view of the mold in its assembled condition;

Figure 6 is a cross-sectional view of the mold illustrated in Figure 5;

Figures 7 and 8 illustrate a membrane which can be made by using the mold shown in Figures 1 to 6, respectively in perspective and by a longitudinal cross-sectional view;

Figure 9 is a schematic partially exploded perspective view of a second embodiment of the mold according to the present invention;

Figure 10 is a cross-sectional view of the mold shown in Figure 9;

Figure 11 is a longitudinal cross-sectional view of the mold shown in Figure 9;

Figure 12 is a schematic cross-sectional view of a third embodiment of the mold for making the membrane;

Figure 13 schematically illustrates the membrane which can be made by using the mold of figure 12, this view further illustrating, by a dashed representation, the shape assumed under pressure by the membrane;

Figure 14 is a schematic partially cross-sectioned exploded view of a fourth embodiment of a mold for making the membrane according to the present invention;

Figure 15 is a schematic cross-sectional view of the mold shown in Figure 14;

Figure 16 is a perspective view of the membrane which can be made by using the mold illustrated in Figures 14 and 15;

Figure 17 is a perspective cross-sectional view of the membrane shown in Figure 16.

## DESCRIPTION OF THE PREFERRED EMBODIMENTS

With reference to the above Figures, the membrane according to the present invention comprises a distal neck portion by means of which the membrane will be connected to an expansion tank, as well as a hollow body extending from this neck portion. In its rest condition, the membrane is provided with at least an inwardly bent portion which can be outwardly bent under a positive pressure difference between the inside of the hollow body and the outside thereof so as to increase the operating volume of the hollow body without excessively increasing the stresses to which the membrane is subjected during its expansion.

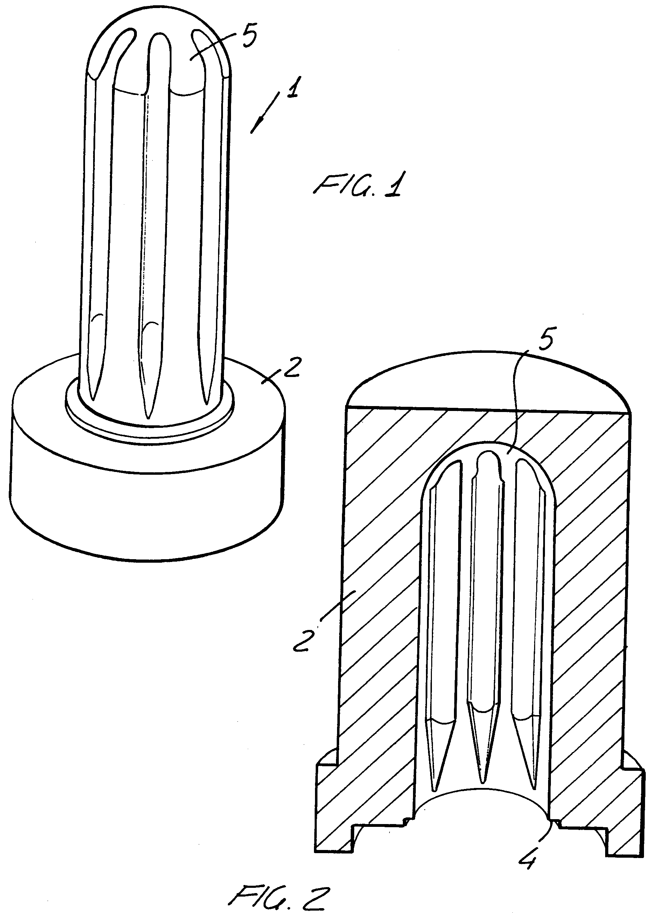

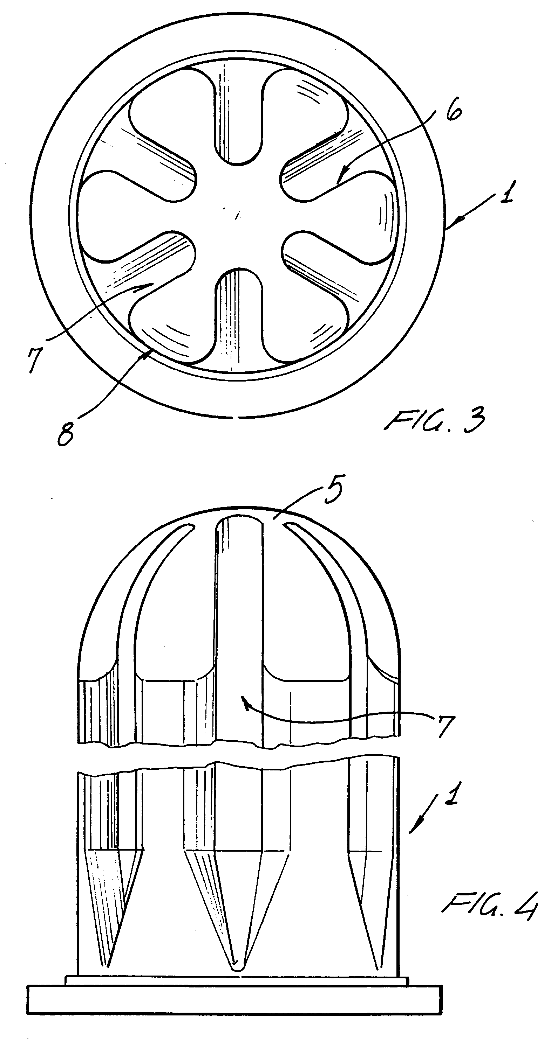

With reference to Figures 1 to 6, the mold for making the membrane according to the present invention, in a first embodiment thereof, substantially comprises a male element 1 and a female element 2, for example made of metal materials, which, as they are introduced into one another, will define an impression or cavity 3 for the injection and/or casting of the synthetic material, such as a rubber material, for forming the membrane.

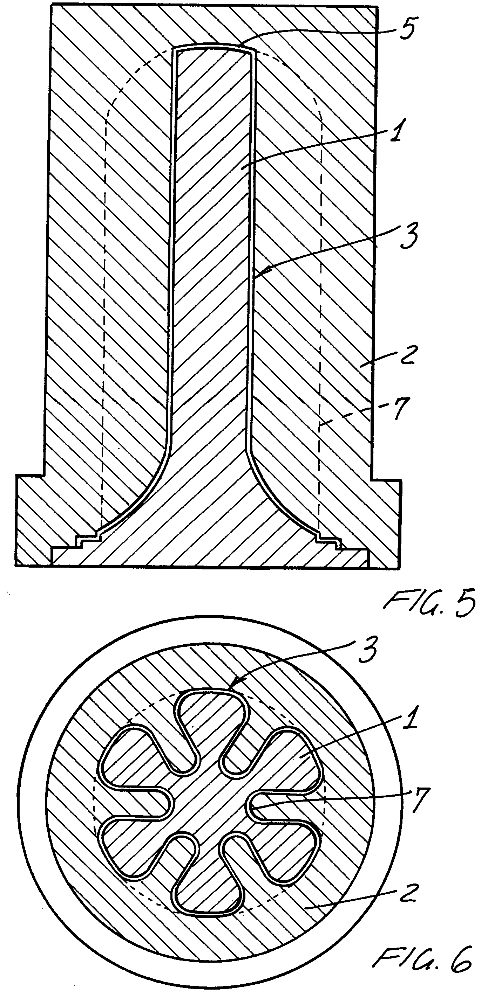

The impression or cavity 3 comprises an annular base portion 4 for forming the attachment flange of the membrane, therefrom it substantially rectilinearly axially extends to a bottom cap 5. The cavity or impression 3, between the base and cap 5, define on each cross-section, a multi-lobe figure 6 which is formed by recesses 7 provided in the male element.

The recesses 7 forming the lobes 8 have a depth which increases from the base 4 to an intermediate region where they have a constant depth, and then reduce their depth because of the curvature of the cap 5.

The impression 3 extends without any cut-out portions within the radial extension of the base 4. Thus, the male half-mold 1 can be easily withdrawn from the female half-mold 2.

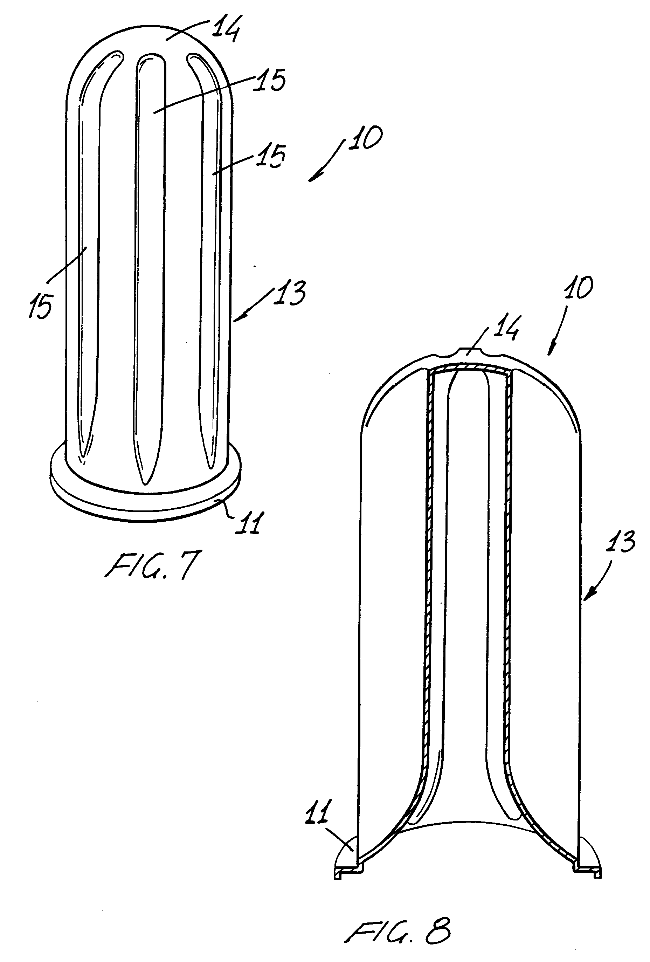

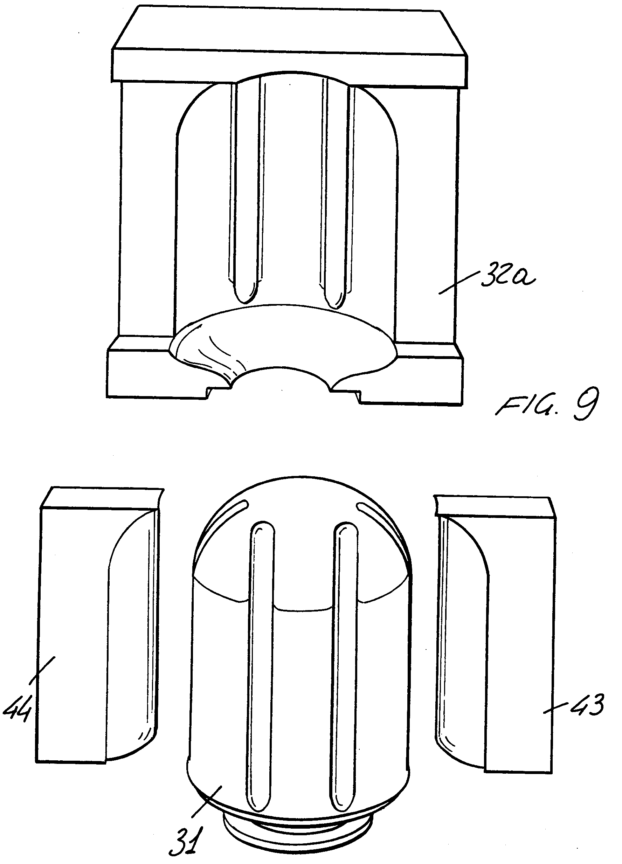

The membrane made by this mold, which is generally indicated at the reference number 10 in Figures 7 and 8, is provided with a distal neck 11, which corresponds to the base 4 of the impressione 3, and a hollow body 13 which axially extends starting from the neck 11 and is provided with inwardly deflected or bent portions 15 defining the expansion directions of the membrane.

As shown, the body 13 of the membrane extends from the neck 11 to a closure cap 14 having a multi-lobe profile defined by the inwardly bent or deflected portions 15. The portions 15, in particular, are inwardly bent with respect to the circumference of the body 13 and define expansion and compression radial directions for the body 13.

The mold 1 provides a constant or even thickness through the overall working surface of the membrane, and accordingly there are eliminated possible breakage points due to the formation of undesired folds because of the action of the pressurizing gas.

The membrane 10, in its inflated condition, will assume a shape substantially corresponding to that of the known membranes. In fact, at each cross-section, since the membrane is made of a rubber or the like material, the several portions thereof are extended so as to assume a circular configuration.

In actual practice, the membrane 10 will assume, from the neck portion 11, at first a conical configuration, then a cylindrical configuration and successively a spherical cup configuration.

Thus, it should be apparent that, the mold volume being the same, impressions 3 can be made which have a size which is substantially two-fold greater than that of prior mold impressions.

This will allow the processing time to be greatly reduced and, accordingly to also reduce the making cost.

Moreover, on the body of the membrane no burr is formed, this burr being exclusively formed at the joining region between the male element 1 and the female element 2, that is of the neck 11 which has no negative effect during the use.

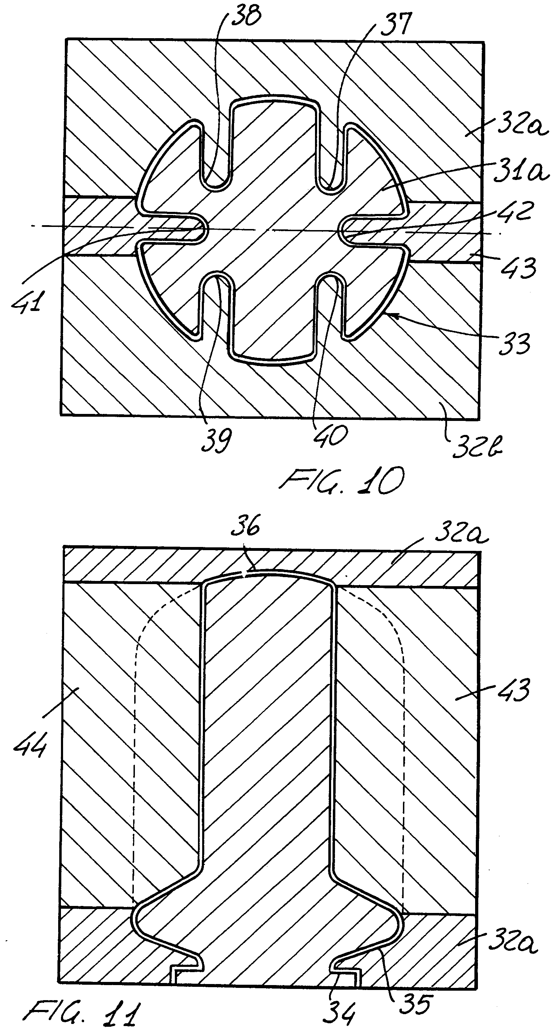

Figures 9 to 11 show another embodiment of the mold for making membranes according to the present invention.

This mold is a so-called "cheek" mold, including a male element 31 arranged between a pair of female half-elements, respectively indicated at 32a and 32b, which abut on a diametrical plane with respect to the male element.

The impression 33, defined by the male element and the two female half-elements, comprises an annular portion 34 which is specifically designed for forming the attachment flange to the container, and which continues with a substantially frustum of cone shaped portion 35 therefrom it axially extends with a substantially rectilinear configuration to an end cap 36.

Also in this case, the impression 33 between the portion 35 and cap 36 forms on each cross-section a multi-lobe figure defined by recesses 37, 38, 39, 40, 41 and 42 of which the first four are coplanar to one another and perpendicular to the other.

Also in this case, the first four recesses are perpendicular to the abutting plane between the female half-elements 32a and 32b whereas the other two recesses, which form cut-out portions, are arranged at the abutting region of the female half-elements 32a and 32b and are defined between the male element 31 and corrisponding withdrawing elements, respectively indicated at 43 and 44, which are herein called "trucks".

It is to be moreover pointed out that the recesses forming the mentioned lobes have a depth which increases from said frustum of cone shaped portion 35 to a region therefrom they extend with a constant depth up to the starting region of the cap 36, the curvature of which reduces again their depth.

In this connection it should be pointed out that the impression 33 is designed so that, after the molding and withdrawing from the mold, the membrane, in a suitably inflated condition, will assume a configuration which is substantially equivalent to that of known membranes.

In fact, at each cross-section, the several lobes will extend because of the resilienty of the material and assume a substantially circular shape.

With respect to the withdrawing or removing step, it is carried as follows: The female elements 32a and 32b are opened, and the trucks 43 and 44 are withdrawn so as to disengage the male element 31.

Then, by any suitable inflating method, the membrane is disengaged from the male element 31, by causing the narrowest portion to expand between the annular portion 34 and frustum of cone shaped portion 35 to an outer diameter corresponding to the maximum diameter of the substantially frustum of cone shape portion 35.

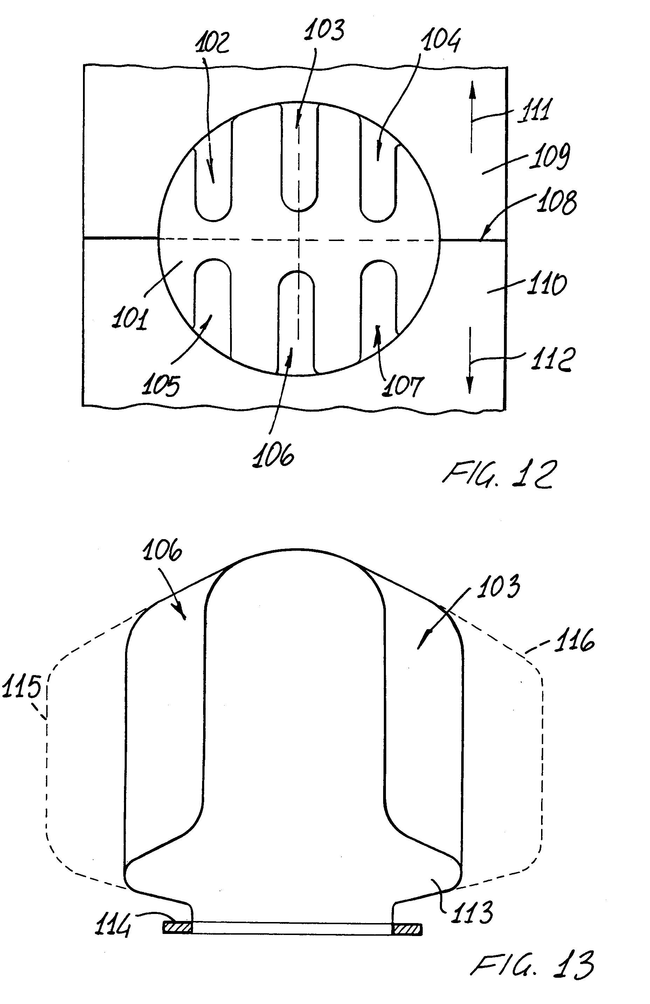

A third embodiment of the mold for making the membrane according to the present invention is shown in Figure 12.

In this case, the mold comprises a male element 101 having six recesses 102, 103, 104, 105, 106 and 107, which extend parallel to one another and perpendicular to the abutment line 108 of the two female half-molds 109 and 100 the opening of which is performed in the direction of the arrows 111 and 112.

This construction, with substantially corresponds to that which has been above disclosed with reference to Figures 9 to 11, allows to omit the trucks since no cut-out exists now with respect to the mold female elements.

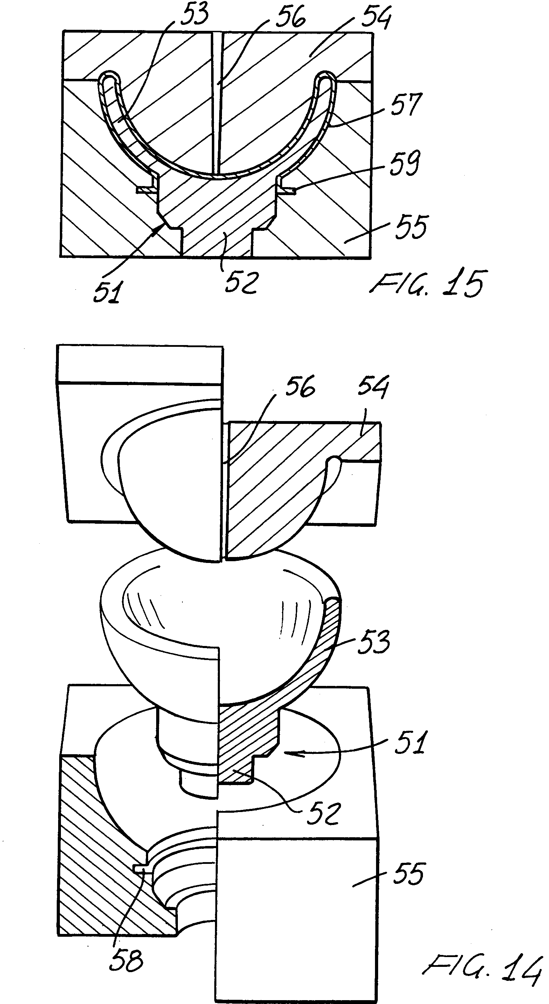

The membrane made by this embodiment of the mold is schematically shown by the cross-sectional view of Figure 13 which illustrates the two intermediate inwardly bent portions corresponding to the recesses 103 and 106, whereas at the bottom portion there is provided a toroidal connecting region 113 which fits to the flange 114.

Under pressure, the inwardly bent portions of the membrane will be outwardly urged so as to be arranged according to the dashed lines 115 and 116.

Thus, before the stretching of the membrane, its volume will be remarkably increased which is very advantageous.

The toroidal connecting region 113 has such a diameter that it can be fitted to the hole of the flange 114 without any danger of breakages during the membrane removing step.

The configuration of the mold, without any cut-outs associated with the female elements, allows the mold to be used both in machines injecting a thermoplastic rubber and in machines which operate by pressure molding.

Figures 14 and 15 illustrate a fourth embodiment of a mold for making membranes according to the present invention. In this embodiment, the mold substantially comprises a first male element 51 defined by a cylindrical base 52 and by a bell portion 53 which axially extends from said base 52.

The first male element 51 is encompassed by a second male element 54 which has a shape provided for fitting to the shape of the inner region of the bell portion 53, and by a female element 55 which has a shape fitting to the shape of the outer part of the bell portion 53 and to the base 52.

The two elements 54 and 55 are peripherically joined to the edge of the bell portion 53.

The elements 54 and 55 and element 51 define about the bell portion 53 an impression adapted for the injection and/or casting of a synthetic material, such as rubber, in order to form a membrane 57.

This injection or casting is performed through a hole 57 which axially extends through the second male element 54.

Advantageously, the female element 55, about the base 52, is provided with a cut-out seat 58 defining the attachment flange 59 for connecting the membrane 57 to a corresponding autoclave vessel or any other desired vessels.

Upon molding, the membrane 57 is removed from the mold as follows: the second male element 54 is lifted and the first male element 51 is driven in the same direction.

Because of the resiliency of the rubber material, the flange 59 is compelled to slide out of its seat 58 so as to disengage from the female element 55.

Then, by any suitable inflating methods, the membrane 57 is disengaged from the first male element 51, by causing the narrowest portion of the flange 59 to expand to a diameter corresponding to the outer diameter of the edge of the bell portion 53.

The membrane 57, in particular, is assembled in a "crushed" or compressed condition as it is obtained from the molding operation.

Also in this case, the mold, the size of the membrane 57 being the same, has a greatly reduced size with respect to prior molds.

This will provide several making advantages, including the possibility of increasing the axial size of the membrane.

More specifically, the membrane 57 made by using the above disclosed mold comprises a substantially bell shape body 66. In fact, a top cap 67 is inwardly bent within a bottom cap 68 of the membrane, which is connected to the flange or neck 59.

The bottom cap 68 is affixed to the top cap 67 by means of a circular crown fitting 70. The top cap 67 defines an expansion and compression direction for the membrane extending along an axis defined by the distal neck 59 and circular crown fitting element 70.

Also in this embodiment, the membrane is so shaped as to oppose to the pressure provided thereon by the pressurizing gas, with a different constructional configuration, but with the same opposition effects to an excessive stretching of the working surface, and overcoming the problems related to a reduction of the thickness of the membrane.

Advantageously, in the above disclosed embodiments of the invention, the membrane according to the invention is no stretched during the operation thereof. In fact, the disclosed membranes, even they are subjected to a comparatively high pressure, tend to recover to their starting configuration like that shown in the figures of the accompanying drawings, as a pressure equilibrium is established between the pressurizing gas and the fluid introduced into said membrane.

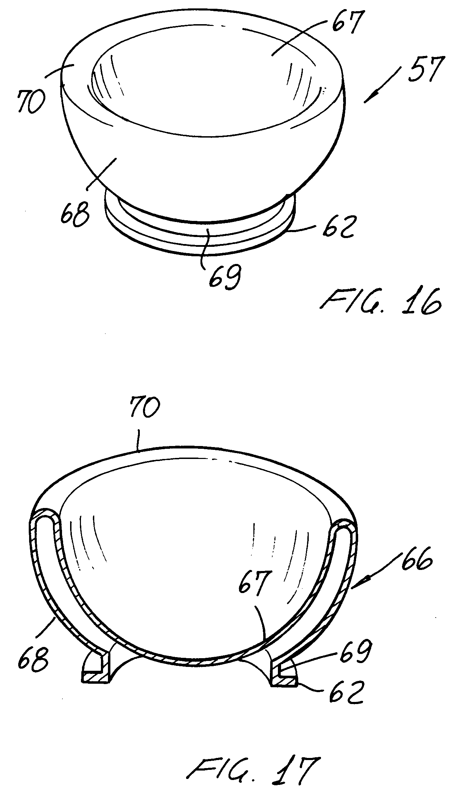

As the pressure of the fluid contained in the membrane exceeds the equilibrium point, the inwardly bent or deflected portions of the membrane shown in Figures 7, 8 and 13 will start to be outwardly deflected, whereas the top cap 67 of the membrane shown in Figures 16 and 17 will be upwardly urged, so as to compress the pressurizing gas.

Accordingly, the membrane of the present invention is stretched only when the pressure therein has such a value as to fully outwardly bend the inwardly bent portions thereof, as well as its top cap 67, whereas the prior art membranes are always stretched during the overall operation thereof.

Thus, the membrane according to the present invention will be advantageously expanded and shrinked without a continuous stretching of the membrane material.

It has been practically found that the invention fully achieves the intended aim and objects, since it eliminates any possible breakages because of an accidental reduction of the thickness of the membrane, or due to possible foldings of the membrane material caused by the pressurizing gas.

Moreover, the membrane according to the invention can be made, owing to its specific construction, by using a very reduced size mold and, accordingly, with a cost which is much less than that of known membranes for this application.

While the invention has been disclosed and illustrated with reference to a preferred embodiment thereof, it should be apparent that the disclosed embodiment is susceptible to several modifications and variations all of which will come within the spirit and scope of the appended claims.

## Claims

1. A membrane for expansion tanks for resevoirs and autoclaves, characterized in that said membrane comprises a distal neck portion to be affixed to an expansion tank and a hollow body extending from said neck portion and including, at a rest condition thereof, at least an inwardly bent portion which can be outwardly bent under a positive pressure differential between the inside of said hollow body and the outside einvironment in order to increase the operating volume of said hollow body.

2. A membrane, according to Claim 1, wherein said hollow body axially extends from said neck to a closure cap having a multi-lobe cylindrical profile and defining a plurality of inwardly bent portions.

3. A membrane, according to Claim 2, wherein said multi-lobe profile defines expansion and compression radial directions of said body.

4. A membrane, according to Claim 1, wherein said hollow body is joined, at a bottom portion thereof, to said neck by means of a substantially frustum of cone shaped base portion tapering toward said neck

5. A membrane, according to Claim 1, wherein said hollow body has a substantially bell shape with an inwardly bent top cap within a bottom cap to which it is joined by a circular crown fitting element.

6. A membrane, according to Claim 5, wherein said top cap defines an expansion direction along an axis defined by said neck and said circular crown fitting element.

7. A membrane, according to Claim 1, wherein said membrane has a membrane body which does not comprises burrs.

8. A mold for making a membrane according to Claim 1, comprising at least a male element and at least a female element engaged within one another and defining in cooperation at least an impression for injecting and/or casting therein a synthetic material for forming said membrane, characterized in that said at least a male element is provided, on a surface thereof defining said impression, with at least a recess provided for defining an inwardly bent portion of a membrane to be made.

9. A mold, according to Claim 8, wherein said impression extends from an annular profile base portion in an axial direction to a bottom cap so as to form on each cross-section thereof a multi-lobe figure arranged inside said annular profile.

10. A mold, according to Claim 9, wherein said annular profile base portion has a circular shape and is designed for forming an attaching flange for said membrane.

11. A mold, according to Claim 9, wherein from said base the recesses forming the lobes of said multi-lobe figure have a depth which increases up to an intermediate region where the depth is held constant, said depth decreasing from the start of said cap because of the curvature of the latter.

12. A mold, according to Claim 8, wherein said male element and said female element are made so as to allow them to be axially engaged within one another and axially disengaged from one another with respect to said impression.

13. A mold, according to Claim 8, wherein said mold is of a cheek type and includes at least a male element arranged between a pair of female half-elements and withdrawing trucks, said multi-lobe figure being joined to said base by an annular profile from a substantially frustum of cone shaped portion which tapers in the direction of said base with annular profile.

14. A mold, according to Claim 8, wherein said multi-lobe figure is defined by recesses of said impression which are arranged perpendicular to the abutting plane of said female half-elements.

15. A mold, according to Claim 8, wherein said multi-lobe figure is defined by recesses which are parallel to an abutment plane of said female half-elements, said impression recesses being defined between said male element and said withdrawing trucks.

16. A mold, according to Claim 8, wherein said at least a male element comprises a first bell shaped male element which is enclosed between a second male element facing a concave side of said first bell male element and a female element encompassing said first bell shaped male element.

17. A mold, according to Claim 16, wherein said first bell shaped male element comprises a cylindrical base therefrom axially extends a bell shaped portion.

18. A mold, according to Claim 16, wherein said second male element is counter-shaped with respect to the inner portion of said bell shaped portion of said first male element.

19. A mold, according to Claim 16, wherein said second male element is axially provided, i.e. coaxially with respect to said first bell shaped male element, with a hole for injecting thereinto molding material.

20. A mold, according to Claim 16, wherein said female element is counter-shaped with respect to an outer portion of said bell shaped first male element, said female element having, circumferentially of said base of said first male element, a cut-out seat for defining said end flange of said membrane.

21. A mold, according to Claim 16, wherein said second male element and said female element are joined at an outer circumferential region with respect to the edge of said bell shaped portion.

22. A mold, according to Claim 8, wherein the elements forming said mold are so designed as to move with respect to one another in an axial direction with respect to the impression formed thereby.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 15

FIG. 14

FIG. 16

FIG. 17

EP 0 505 338 A1

**European Patent Office**

## EUROPEAN SEARCH REPORT

Application Number

EP 92 83 0137

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-842 835 (BERGER) | 1-4 | B29D31/00 |
| Y | * page 3, line 70 - page 3, line 78; figures 1,2 * | 8-22 | F15B1/47 |
| | --- | | |
| X | FR-A-1 518 045 (HYDROTROLE LTD.) | 1-4 | |
| Y | * the whole document * | 8-22 | |
| | --- | | |
| X | EP-A-0 218 304 (FLAMCO B.V.) | 1,5-7 | |
| | * column 4, line 38 - column 5, line 14 * | | |
| | --- | | |
| X | US-A-3 625 256 (SMITH) | 1,5-7 | |
| Y | * column 3, line 20 - column 4, line 2 * | 8-22 | |
| | --- | | |
| X | FR-A-1 362 082 (S.A. ANDRE CITROEN) | 1,5-7 | |
| Y | * the whole document * | 8-22 | |
| | --- | | |
| Y | US-A-2 877 497 (MERCIER) | 8-22 | |
| | * the whole document * | | |
| | --- | | |
| Y | DE-A-2 832 177 (VANOTTI) | 8-22 | |
| | * claim 1; figure 1 * | | **TECHNICAL FIELDS SEARCHED (Int. Cl.5)** |
| | --- | | |
| Y | FR-A-2 146 231 (MERCIER) | 8-22 | B29C |
| | * figure 3 * | | B29D |
| | | | F15B |
| | ----- | | |

The present search report has been drawn up for all claims

| Place of search | Date of completion of the search | Examiner |
|---|---|---|
| THE HAGUE | 15 JUNE 1992 | SOZZI R. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)

17